# EUROPÄISCHE PATENTSCHRIFT

(11) **EP 2 382 493 B1**
(45) Veröffentlichungstag und Bekanntmachung des Hinweises auf die Patenterteilung: **24.05.2017**
(21) Anmeldenummer: 10707433.8
(22) Anmeldetag: 27.01.2010
(51) Int. Cl.: G01S 17/48, G01S 17/89, G01S 7/481, G01S 7/497

(54) **VORRICHTUNG UND VERFAHREN ZUR BERÜHRUNGSLOSEN MESSUNG EINES ABSTANDS UND/ODER EINES PROFILS**
DEVICE AND METHOD FOR NON-CONTACTING MEASUREMENT OF A DISTANCE AND/OR PROFILE
DISPOSITIF ET PROCÉDÉ DE MESURE SANS CONTACT D'UNE DISTANCE ET/OU D'UN PROFIL

(30) Priorität: 27.01.2009 DE 102009006323
(43) Veröffentlichungstag der Anmeldung: 02.11.2011
(73) Patentinhaber: Micro-Epsilon Optronic GmbH, 01465 Dresden-Langebrück (DE)
(72) Erfinder: OTTO, Tobias, 01109 Dresden (DE); MEJA, Peter, 01109 Dresden (DE); STAUTMEISTER, Torsten, 01465 Dresden-Langebrück (DE)
(74) Vertreter: Patent- und Rechtsanwälte Ullrich & Naumann
(86) Internationale Anmeldenummer: PCT/DE2010/000081
(87) Internationale Veröffentlichungsnummer: WO 2010/085940

(56) Entgegenhaltungen:
- EP-A2- 1 760 509
- DE-A1-102007 050 097
- US-A- 5 235 467
- US-A- 5 255 116
- US-A1- 2007 181 810
- US-A1- 2007 219 720

## Beschreibung

Die Erfindung betrifft eine Vorrichtung zur berührungslosen Messung eines Abstands und/oder eines Profils eines Messobjekts, wobei eine Lichtquelle einen Beleuchtungslichtstrahl zum Beleuchten des Messobjekts erzeugt und wobei ein Detektor zur Detektion des an dem Messobjekt reflektierten Anteils des Beleuchtungslichtstrahls vorgesehen ist. Die Erfindung betrifft ferner ein entsprechendes Verfahren.

Derartige Vorrichtungen zur berührungslosen Messung eines Abstands und/oder eines Profils sind aus der Praxis seit langem bekannt. Hierbei erzeugt eine Lichtquelle einen Beleuchtungslichtstrahl, der mittels einer Optik aufbereitet worden ist. Der Beleuchtungslichtstrahl wird auf ein Messobjekt gelenkt und beleuchtet das Messobjekt punktförmig. An dem Messobjekt reflektierte Anteile des Beleuchtungslichtstrahls werden durch eine Detektionsvorrichtung des Sensors detektiert und hieraus auf den Abstand des Messobjekts von dem Sensor geschlossen.

Sehr häufig arbeiten derartige Sensoren nach dem Triangulationsprinzip. Hierbei verändert sich der durch den reflektierten Anteil des Beleuchtungslichtstrahls beleuchtete Punkt des Detektorarrays in Abhängigkeit des Abstands des Messobjekts vom Sensor. Zur Bestimmung des Abstands wird eine Beziehung zwischen dem beleuchteten Detektorelement und dem Abstand des Messobjekts hergestellt. Dies kann prinzipiell aus der Sensorgeometrie berechnet werden. Meist werden jedoch Kalibrierungsmessungen durchgeführt und die Korrelation zwischen Abstand und beleuchtetem Bildpunkt abgespeichert.

Zur Verbesserung der Empfindlichkeit der Sensorvorrichtungen ist es bekannt, dem Beleuchtungslichtstrahl eine geringe linienförmige Ausdehnung zu geben. Gängig sind Linienlängen im Bereich von 2 bis 3 mm. Dies trägt der Tatsache Rechnung, dass häufig Detektorarrays mit rechteckförmigen Detektorelementen zum Einsatz kommen. Bei punktförmiger Beleuchtung wird meist nicht die gesamte verfügbare Fläche der Detektorelemente genutzt, sondern lediglich ein Teil der Elemente beleuchtet. Durch Ausformung einer Beleuchtungslinie und durch geeignete Anpassung der Sensorvorrichtung kann die beleuchtete Fläche eines Detektorelements erhöht werden. Dadurch kann die Empfindlichkeit der gesamten Sensorvorrichtung erhöht werden.

Ein derartiger Sensor ist aus der DE 10 2007 050 097 A1 bekannt. Dieser weist eine strukturierte Frontscheibe auf, die einen durch eine Lichtquelle erzeugten gebündelten Lichtstrahl in mindestens eine Richtung aufweitet. Eine erste Linse fokussiert den von der Lichtquelle ausgesendeten Lichtstrahl. Zwischen Linse und deren von der Lichtquelle abgewandten Brennpunkt ist die Frontscheibe mit mehreren optischen Elementen angeordnet. Diese erzeugt einen schmalen annähernd parallel verlaufenden Beleuchtungslichtstrahl. Als optische Elemente sind verschiedene mögliche Implementierungen genannt, beispielsweise Zylinder- oder Kugellinsen, Linsenabschnitte hieraus, wie beispielsweise bei Fresnel-Linsen, oder Blenden- oder Gitterstrukturen. Durch Aufbringen der optischen Elemente auf die Frontscheibe soll der Aufwand für die Justierung von Lichtquelle, Optik und Gehäuse relativ zueinander reduziert werden. Ein hoher Justieraufwand soll insbesondere durch mehrere hintereinander angeordnete Linsen entstehen.

Ein sehr ähnlicher Sensoraufbau ist in der DE 10 2007 050 096 A1 gezeigt. Ergänzend sind Mittel zum Homogenisieren des Lichtstrahls eingesetzt.

Nachteilig bei beiden Ausgestaltungen ist, dass die optischen Eigenschaften des Sensors nicht unabhängig von mechanischen Belastungen des Sensors sind. Wird die vergleichsweise große Frontscheibe mechanisch belastet, verformt sie sich und es verändern sich die optischen Eigenschaften des Sensors. Weiter problematisch ist, dass bei einer defekten Frontscheibe nach deren Austausch neue Kalibrierungsmessungen notwendig sind, da die optischen Eigenschaften der neuen Frontscheibe nicht identisch zu der zuvor verwendeten Frontscheibe sein werden. Dadurch steigen die Kosten des Betriebs.

Zur Bestimmung eines Profils des Messobjekts müssen mehrdimensionale Informationen über das Messobjekt vorliegen. Hierzu wird meist der Triangulationssensor oder das Messobjekt bewegt und das Messobjekt sukzessive abgescannt. Dabei wird der Beleuchtungslichtstrahl im Allgemeinen mäanderförmig über das Messobjekt bewegt. Nachteilig ist, dass der Scanvorgang sehr zeitaufwändig ist und dadurch in vielen Anwendungsbereichen, beispielsweise bei der Vermessung von Profilen von Fahrzeugreifen, ungeeignet ist.

Eine Navigations- und Steuerungssystem für autonome Fahrzeuge, bei dem eine Umgebung sukzessive abgetastet wird, ist in der US 2007/0219720 A1 offenbart. Ein Emitter erzeugt Laserpulse, die durch einen Strahlaufweiter und einen Kollimator laufen. Ein feststehender Spiegel und ein rotierender Spiegel lenken die Laserstrahlen auf Linsen, die den Laserstrahl fokussieren, und auf eine Teleskopoptik. Da die Teleskopoptik nach dem Brennpunkt der Linsen angeordnet ist, ist der Laserstrahl bei der Teleskopoptik aufgefächert. Die Teleskopoptik erzeugt hieraus einen annähernd parallelen Beleuchtungslichtstrahl. Durch Bewegen des rotierenden Spiegels kann der Beleuchtungslichtstrahl in vertikaler Richtung einen Bereich α überstreichen. In horizontaler Richtung wird die gesamte Anordnung verschwenkt, um einen Bereich β zu überstreichen. Auf diese Weise kann der gesamte Bereich vor dem Fahrzeug sukzessive ausgeleuchtet und durch Laufzeitmessung der Abstand eines eventuell vorhandenen Hindernisses bestimmt werden. Mit Kenntnis der horizontalen und vertikalen Verschwenkung kann der Bereich bestimmt werden, in dem sich das Hindernis befindet.

Andere Lösungen nutzen einen Beleuchtungslichtstrahl, der das Messobjekt linienförmig beleuchtet. Zur Vermeidung einer voluminösen und schweren Sensoroptik, kommt meist ein divergenter Beleuchtungslichtstrahl zum Einsatz. Bei stark strukturierten Messobjekten führt dies jedoch zu Abschattungen einzelner Bereiche auf dem Messobjekt, wodurch keine zuverlässige Vermessung dieser Messobjekte möglich ist. Andere System, wie der in der DE 10 2007 050 097 A1 beschriebene Sensor, könnten zwar durch Verlängerung der Beleuchtungslinie für eine 2-dimensionale Vermessung eines Messobjekts angepasst werden, allerdings ergeben sich dadurch sehr große Optiken. Außerdem ist eine annähernd gleichmäßige Intensität der Beleuchtung längs der Beleuchtungslinie nur mit großem Aufwand, beispielsweise dem Einsatz von Mitteln zur Homogenisierung des Lichtstrahls, realisierbar.

Die US 5,473,426 A offenbart eine Vorrichtung zum Auffinden von Fehlstellen bei einer Fotomaske, wie sie beispielsweise bei fotolithografischen Prozessen bei der Halbleiterherstellung Verwendung finden. Ein Laser erzeugt einen Lichtstrahl, der mit einer negativen Zylinderlinse zunächst aufgefächert und anschließend mit einer positiven Zylinderlinse parallelisiert wird. Der Beleuchtungslichtstrahl wird dann zur linienförmigen Beleuchtung auf die Fotomaske gerichtet und trifft dabei annähernd senkrecht auf die Fotomaske. Wenn der Beleuchtungslichtstrahl auf der Fotomaske eine Fehlstelle trifft, wird der Beleuchtungslichtstrahl an der Fehlstelle gestreut, so dass in einem Liniendetektor ein Teil des Beleuchtungslichtstrahls detektiert werden kann. Auf diese Weise kann auf Fehlstellen und deren Position auf der Fotomaske geschlossen werden. Zur Abstands- oder Profilmessung ist diese Vorrichtung jedoch nicht geeignet.

Der vorliegenden Erfindung liegt die Aufgabe zugrunde, eine kompakte und vielseitig einsetzbare Sensorvorrichtung anzugeben, mittels der eine zuverlässige zweidimensionale Vermessung eines Messobjekts ermöglicht wird. Ein entsprechendes Verfahren soll angegeben werden.

Erfindungsgemäß wird die voranstehende Aufgabe durch die Merkmale des Anspruchs 1 gelöst. Danach ist die in Rede stehende Vorrichtung dadurch gekennzeichnet, dass im Strahlengang des Beleuchtungslichtstrahls eine erste Optik und eine zweite Optik angeordnet sind, wobei die erste und die zweite Optik derart ausgestaltet sind, dass der Beleuchtungslichtstrahl zunächst mittels der ersten Optik in einer parallel zur Ausbreitungsrichtung angeordneten Auffächerungsebene aufgefächert und danach mittels der zweiten Optik annähernd parallelisiert wird, wobei in Richtungen senkrecht zur Auffächerungsebene im Wesentlichen keine Auffächerung stattfindet, und dass die zweite Optik eine Fresnel-Linse umfasst.

In verfahrensmäßiger Hinsicht ist die zuvor genannte Aufgabe durch die Merkmale des Anspruchs 11 gelöst. Danach ist das in Rede stehende Verfahren dadurch gekennzeichnet, dass das Messobjekt unter Verwendung einer ersten Optik und einer zweiten Optik im Strahlengang des Beleuchtungslichtstrahls linienförmig beleuchtet wird, wobei der Beleuchtungslichtstrahl mittels der ersten Optik in einer parallel zur Ausbreitungsrichtung angeordneten Auffächerungsebene aufgefächert wird, während in Richtungen senkrecht zur Auffächerungsebene keine Auffächerung stattfindet, und wobei der Beleuchtungslichtstrahl nach Auffächerung durch die zweite Optik annähernd parallelisiert wird, wobei die zweite Optik eine Fresnel-Linse umfasst.

In erfindungsgemäßer Weise ist zunächst erkannt worden, dass die zuvor genannten und gegenläufig wirkenden Problemstellungen durch vergleichsweise einfache Maßnahmen gelöst werden können. Hierzu wird zunächst der durch eine Lichtquelle erzeugte Lichtstrahl mittels einer ersten Optik in einer Auffächerungsebene aufgefächert, wobei die Auffächerungsebene parallel zur Ausbreitungsrichtung des Beleuchtungslichtstrahls angeordnet ist. Hierbei ist die Ausbreitungsrichtung im Bereich der Optik gemeint, in der die Auffächerung stattfindet. Wesentlich für die Erfindung ist es, dass sich die Auffächerung im Wesentlichen auf eine Raumrichtung beschränkt, d.h. dass der Lichtstrahl nicht wesentlich in mehrere Raumrichtungen aufgeweitet wird. Die Auffächerung beschränkt sich also im Wesentlichen in Richtungen parallel zu der Auffächerungsebene, während in Richtungen senkrecht zur der Auffächerungsebene praktisch keine Auffächerung stattfindet. Der derart aufgefächerte Lichtstrahl trifft danach als schmaler Streifen auf eine zweite Optik, mittels der die Lichtstrahlen annähernd parallelisiert werden. Durch die vorhergehende Auffächerung in einer Auffächerungsebene kann die zweite Optik recht schmal ausgeführt werden. Die derart annähernd parallelisierten Lichtstrahlen verlassen die Sensorvorrichtung werden als Beleuchtungslichtstrahl auf das Messobjekt gelenkt. Durch diese Kombination einer ersten und einer zweiten Optik lassen sich Beleuchtungslinienlängen im Bereich von mehreren Zentimetern erreichen. Dabei ist die erfindungsgemäße Vorrichtung insbesondere für Anordnungen mit kurzem Abstand zum Messfeld geeignet.

Durch Verwendung eines annähernd parallelen Beleuchtungslichtstrahls können Abschattungseffekte auf einer strukturierten Oberfläche des Messobjekts verringert werden. Es kann eine weitgehend gleichmäßige Beleuchtung erreicht werden. Eine Homogenisierung des Beleuchtungslichtstrahls ist nicht notwendig. Durch die parallele Strahlenführung ist ferner - bedingt durch einen nahezu konstanten Lichteinfallwinkel auf der Oberfläche eines Messobjekts über die gesamte Linienlänge - eine gleiche Rückstreuverteilung erreichbar. Durch die Verwendung der schmalen zweiten Optik kann eine erhebliche Miniaturisierung und Gewichtseinsparung erreicht werden. Dennoch kann eine mechanisch stabile Vorrichtung durch die erfindungsgemäßen Maßnahmen erreicht werden.

Die zweite Optik kann durch verschiedene diffraktive, refraktive oder holographische Elemente gebildet sein. Hierzu sind verschiedene Linsen oder Linsensysteme, Blenden- oder Gitterstrukturen aus dem Stand der Technik bekannt. Erfindungsgemäß umfasst die zweite Optik jedoch eine Fresnel-Linse oder wird durch eine Fresnel-Linse gebildet. Dies trägt zu einer weiteren Gewichtsreduzierung und Miniaturisierung der Sensorvorrichtung bei.

Zur noch weiteren Gewichtsreduzierung kann die Fresnel-Linse aus Kunststoff hergestellt sein. Aus der Praxis sind verschiedene Kunststoffe bekannt, die ausreichend gute optische Eigenschaften aufweisen.

Vorzugsweise ist die Fresnel-Linse als zylindrische Fresnel-Linse ausgebildet.

Vorzugsweise sind die Stufungen der Fresnel-Linse im Wesentlichen senkrecht zur Auffächerungsebene des Beleuchtungslichtstrahls ausgebildet. Dadurch kann erreicht werden, dass der Beleuchtungslichtstrahl durch die Fresnel-Linse lediglich in Richtungen parallel zur Auffächerungsebene beeinflusst wird. Allerdings können die Stufungen auch leicht gebogen sein, so dass durch die Fresnel-Linse auch in geringem Maße eine Beeinflussung in Richtungen senkrecht zu der Auffächerungsebene vorgenommen wird. Dadurch könnte die Abstrahlcharakteristik der Sensorvorrichtung beeinflusst werden, ohne gleichzeitig einen stark erhöhten Justageaufwand der einzelnen Komponenten zur Folge zu haben.

Zur Vereinfachung einer Anpassung der Sensorvorrichtung passiert der Beleuchtungslichtstrahl jedoch vorzugsweise die zweite Optik in Richtungen senkrecht zu der Auffächerungsebene im Wesentlichen unverändert. Dadurch besteht der Vorteil, dass der Beleuchtungslichtstrahl unter Verwendung der ersten Optik und der zweiten Optik in Richtungen parallel und senkrecht zu der Auffächerungsebene unabhängig voneinander eingestellt werden kann. Über die erste Optik kann die Form des Beleuchtungslichtstrahls in Richtungen senkrecht zu der Auffächerungsebene eingestellt werden, während die Abstrahlcharakteristik in Richtungen parallel zu der Auffächerungsebene durch die zweite Optik eingestellt werden kann.

Zusätzlich kann die erste Optik nicht nur aus einer einzelnen sondern auch aus zwei oder mehr Komponenten bestehen. Dadurch kann durch eine erste Komponente der ersten Optik die Abstrahlcharakteristik in Richtungen senkrecht zur Auffächerungsebene eingestellt werden (beispielsweise in Form eines leicht konvergierenden Lichtstrahls in Richtungen senkrecht zur Auffächerungsebene). Eine zweite Komponente der ersten Optik kann eine Auffächerung parallel zur Auffächerungsebene gewährleisten.

Die erste Optik könnte einen Kolliminator aufweisen, der den die Lichtquelle verlassenden Lichtstrahl bündelt. Der Kolliminator kann die Strahlformungen in Richtung senkrecht zur Auffächerungsebene gewährleisten.

Die erste Optik könnte ferner eine Linienoptik aufweisen, mittels der eine Auffächerung des Beleuchtungslichtstrahls erreicht wird. Vorzugsweise ist die Linienoptik in der Nähe eines Brennpunktes der Fresnel-Linse, nämlich des Brennpunktes auf der Seite der Lichtquelle, angeordnet.

Durch Verwendung des Kollimators und der Linienoptik könnten eine erste und eine zweite Komponente der ersten Optik realisiert sein, wie sie zuvor bereits beschrieben worden sind.

Der Beleuchtungslichtstrahl wird auf ein Messobjekt gelenkt, dort zumindest teilweise reflektiert und durch einen Detektor detektiert. Der Detektor weist eine Detektionsoptik auf, die neben klassischen abbildenden Elementen auch aus einer oder einer Kombination mehrerer Zylinderlinsen bestehen kann. Möglich sind auch diffraktive oder holographische Elemente. Wesentlich ist, dass die Optik eine Abbildung ermöglicht, bei der die Position des beleuchteten Bildpunkts auf den Detektorarray von dem Abstand des Messobjekts von der Sensorvorrichtung abhängt. Die Detektionsoptik kann neben klassischen abbildenden Elementen eine Kombination mehreren Zylinderlinsen umfassen bzw. als diffraktives oder holographisches Element ausgeprägt sein.

In weiter vorteilhafter Weise ist in der Sensoranordnung ein näherungsweise parallelisierter Empfangsstrahlengang vorgesehen, wodurch sich eine geringere Abschattung bei noch besserer konstanter Reflexionsgeometrie ergibt.

Vorzugsweise sind das Austrittsfenster und die Optik vollständig getrennt voneinander ausgestaltet. Hierzu wird die Optik beabstandet von dem Austrittsfenster angeordnet. Durch das Austrittsfenster ist die Optik effektiv gegen Beschädigungen und Verschmutzungen geschützt. Ferner kann durch Verwendung eines annähernd parallelen Beleuchtungslichtstrahls ein annähernd senkrechtes Durchdringen des Austrittsfensters erreicht werden, wodurch keine weiteren Brechungseffekte an den Austrittsfenster entstehen. Eine Deformation des Austrittsfensters hat dadurch einen deutlich geringeren Einfluss auf die Abbildungseigenschaften.

Die gesamte Sensorvorrichtung ist vorzugsweise in einem Gehäuse angeordnet, wobei der Beleuchtungslichtstrahl das Gehäuse durch ein Austrittsfenster verlässt. Der durch das Messobjekt reflektierte Anteil des Beleuchtungslichtstrahls kann durch ein Eintrittsfenster in das Gehäuse gelangen. Dabei könnte Austrittsfenster und Eintrittsfenster als separate Fenster ausgebildet sein. In einer bevorzugten Ausgestaltung sind Austrittsfenster und Eintrittsfenster jedoch durch ein gemeinsames Fenster gebildet.

Durch die Aufteilung der Sensoroptik in verschiedene Komponenten ist es möglich, die Abstrahlcharakteristik der Sensorvorrichtung weitestgehend frei einzustellen. Zur Anpassung der Vorrichtung kann eine Anpassung des Abstands zwischen der ersten Optik und der zweiten Optik durchgeführt werden. Dadurch verändert sich die Abstrahlcharakteristik in Richtungen parallel zur Auffächerungsebene. Ist die erste Optik durch zwei Komponenten realisiert, so kann durch eine Veränderung des Abstands dieser Komponenten weiterhin eine Änderung der Abstrahlcharakteristik in Richtungen senkrecht zur Auffächerungsebene erzielt werden. Auf diese Weise kann flexibel die summarische Abstrahlcharakteristik der Sensorvorrichtung definiert werden. Allerdings ist es durch die Wahl der einzelnen Komponenten, die im Wesentlichen lediglich eine Beeinflussung in eine Richtung zur Folge haben, die Justage der Komponenten vergleichsweise einfach.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: eine Seitenansicht einer erfindungsgemäßen Sensorvorrichtung,
- Fig. 2: eine Draufsicht der Sensorvorrichtung nach Fig. 1 und
- Fig. 3: eine Draufsicht einer Sensorvorrichtung, bei der - anders als bei einer erfindungsgemäßen Sensorvorrichtung ein divergenter Beleuchtungslichtstrahl Verwendung findet.

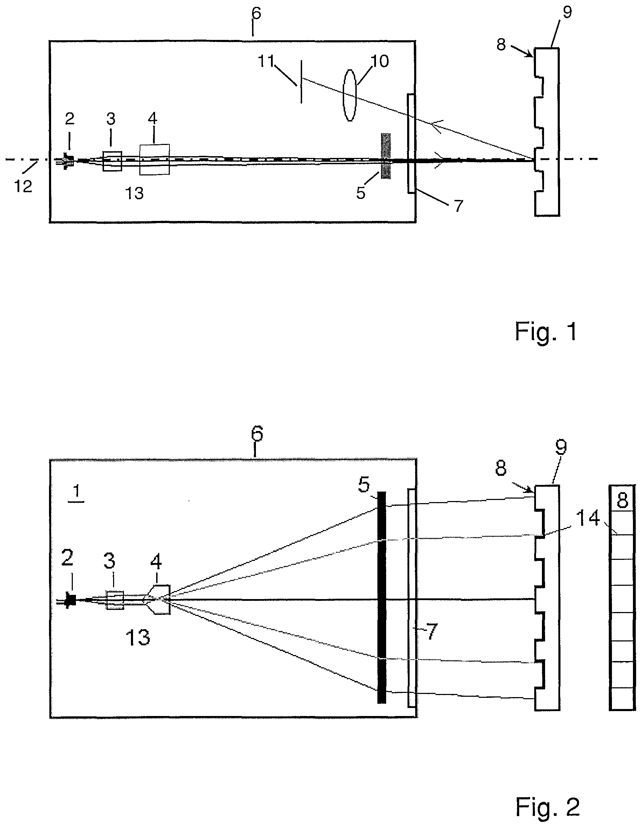

Fig. 1 zeigt eine Seitenansicht einer erfindungsgemäßen Sensorvorrichtung. Eine Draufsicht auf die Sensorvorrichtung ist in Fig. 2 dargestellt. Dabei ist in Fig. 2 ein Schnitt längs der optischen Achse der ersten Optik und der Fresnel-Linse dargestellt. Die optische Achse ist in Fig. 1 mit Bezugszeichen 12 als strich-punktierte Linie eingezeichnet.

Die in den Fig. 1 und 2 dargestellte Vorrichtung 1 weist eine Lichtquelle 2 auf, die einen Lichtstrahl erzeugt. Die Lichtquelle 2 ist in diesem Ausführungsbeispiel durch einen Halbleiterlaser gebildet. Der Lichtstrahl wird durch einen Kollimator 3 fokussiert und danach durch eine Linienoptik 4 aufgefächert. Die Auffächerung erfolgt parallel zu einer Auffächerungsebene, die parallel zur optischen Achse 12 der ersten Optik 13 (bestehend aus Kollimator 3 und Linienoptik 4) und einer zweiten Optik (einer Fresnel-Linse 5) ist. Die Auffächerungsebene ist in Fig. 1 senkrecht zur Zeichenebene angeordnet; in Fig. 2 fällt sie mit der Zeichenebene zusammen. Der aufgefächerte Lichtstrahl wird durch die Fresnel-Linse 5 derart gebrochen, dass ein annähernd paralleler Lichtstrahl die Fresnel-Linse 5 verlässt. Die beschriebenen Komponenten sind in einem Gehäuse 6 angeordnet.

Der derart aufbereitete Beleuchtungslichtstrahl verlässt das Gehäuse 6 der Sensorvorrichtung durch ein Fenster 7, das in dieser Ausgestaltung als Austritts- und Eintrittsfenster fungiert. Der Beleuchtungslichtstrahl wird auf eine Oberfläche 8 eines Messobjekts 9 gelenkt und beleuchtet das Messobjekt 9 linienförmig. Ein an der Oberfläche 8 des Messobjekts 9 reflektierter Anteil des Beleuchtungslichtstrahls gelangt durch das Fenster 7 in das Gehäuse 6 der Sensorvorrichtung 1. Das Fenster 7 kann dabei durch eine Beschichtung oder geeigneter Materialwahl derart ausgebildet sein, dass lediglich Wellenlängen im Bereich des Spektrums des Beleuchtungslichtstrahls das Fenster passieren können. Dadurch wird die Empfindlichkeit gegenüber Fremdlicht reduziert.

Der durch das Fenster 7 in das Gehäuse gelangende Anteil des an der Oberfläche 8 des Messobjekts 9 reflektierten Beleuchtungslichtstrahls wird durch eine Detektionsoptik 10 aufbereitet und auf einen Detektor 11 gelenkt. Dabei kommt eine Detektormatrix zum Einsatz. Abhängig von der Position der beleuchteten Bildpunkte der Detektormatrix wird auf einen Abstand zu dem Messobjekt 9 geschlossen. Durch die linienförmige Beleuchtung des Messobjekts 9 entsteht bei strukturierter Oberfläche 8 des Messobjekts 9 ein Linienverlauf auf dem Detektorarray, der repräsentativ für die Gestalt der Oberfläche 8 ist. Dadurch kann neben einem Abstand des Messobjekts 9 zu der Sensorvorrichtung 1 ein Profil des Messobjekts bestimmt werden. Auf die Bestimmung des Abstandes kann auch verzichtet werden, wenn lediglich die Bestimmung des Profils, d.h. die Abstandsveränderung längs der Beleuchtungslinie, von Interesse ist. Bewegt sich das Messobjekt relativ zu dem Beleuchtungslichtstrahl, kann eine dreidimensionale Struktur des Messobjekts bestimmt werden. Auf diese Weise lassen sich beispielsweise Profilierungen von Fahrzeugreifen vermessen und eventuelle Beschädigungen oder eine zu starke Abnutzung des gesamten Reifens oder an Teile des Reifens erkennen. Durch die erfindungsgemäße Ausgestaltung der Sensorvorrichtung kann die gesamte Breite des Fahrzeugreifens durch eine einzelne Beleuchtungslinie beleuchtet werden, ohne gleichzeitig zu sehr großen Sensorvorrichtungen zu führen.

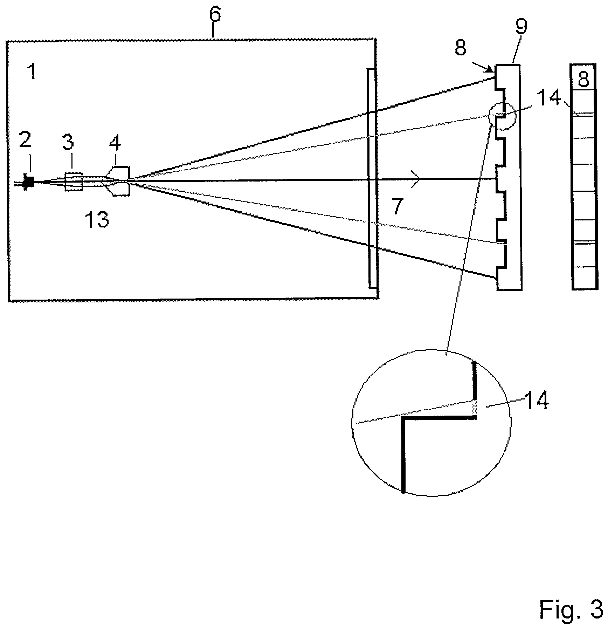

Fig. 3 zeigt eine Sensorvorrichtung mit einem - im Gegensatz zu einer erfindungsgemäßen Sensorvorrichtung - divergenten Beleuchtungsstrahl. Dadurch ist erkennbar, wie sich Abschattungseffekte auswirken können. Wie bei der Anordnung nach Fig. 1 oder 2 wird ein strukturiertes Messobjekt 9 mit einem Beleuchtungslichtstrahl beleuchtet. Anders als bei der erfindungsgemäßen Sensorvorrichtung verlässt der Beleuchtungslichtstrahl die Sensorvorrichtung jedoch nicht als im Wesentlichen parallelen Lichtstrahl, sondern weist einen divergenten Strahlengang auf. Wie mit dem Bezugszeichen 14 in einer Vergrößerung am unteren Bildrand zu erkennen, kommt es zu starken Abschattungen an Kanten der strukturierten Oberfläche, d.h. einzelne Bereiche der Oberfläche sind nicht ausleuchtbar. Dies tritt insbesondere unter großen Auffächerungswinkeln auf, die vielfach zur Verkleinerung der Sensoroptiken billigend in Kauf genommen werden. Im Vergleich hierzu lässt sich die Abschattung durch eine nahezu parallele Beleuchtung deutlich reduzieren (Fig.2).

Bei der erfindungsgemäßen Sensorvorrichtung bietet die in dem divergierenden Strahlenkanal angeordnete Fresnel-Linse insbesondere die folgenden Vorteile:
1. Verringerung von Abschaltungseffekten auf strukturierten Oberflächen durch einen nahezu parallelen Strahlenverlauf der Beleuchtung.
2. Gleiche Rückstreuverteilung aufgrund des nahezu konstanten Lichteinfallwinkels über die gesamte Linienlänge des Beleuchtungslichtstrahls.
3. Miniaturisierung und Gewichteinsparung des Gehäuses 6 bei kleinem Arbeitsabstand durch die flache Fresnel-Linse, die günstigstenfalls aus Kunststoff ausgebildet ist.

Darüber hinaus kann die erfindungsgemäße Vorrichtung ohne Homogenisierung des Beleuchtungslichtstrahls verwendet werden, d. h. die einzelnen Strahlenbündel in dem Beleuchtungslichtstrahl werden nicht gemischt. Das Licht der Lichtquelle wird durch die erste Optik von einem konzentrischen Bündel zu einem linienförmigen Bündel noch vor der Fresnel-Linse geformt. Die Fresnel-Linse ist ein eigenständiges optisches Bauelement und befindet sich in einem Abstand von anderen optischen Komponenten. Besondere Maßnahmen zum Schutz der Fresnel-Linse sind nicht notwendig, da sich die Fresnel-Linse im Inneren des Gehäuses hinter einem Fenster befindet. Besondere Maßnahmen und besonders gestaltete Lichtquellen sind nicht notwendig. Durch Verwendung eines Kollimators und einer Linienoptik kann der durch die Lichtquelle erzeugte Lichtstrahl sehr frei geformt werden. Jedes der einzelnen optischen Bauelemente kann für sich gesehen optimiert und eingestellt werden. Durch die Auffächerung des Beleuchtungslichtstrahls durch die Linienoptik 4 kann die Fresnel-Linse relativ schmal ausgeführt werden, so dass sich hier wiederum Gewichtseinsparungen erzielen lassen. Zusätzlich kann eine sehr kompakte Bauform der Sensorvorrichtung erzielt werden.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel der erfindungsgemäßen Vorrichtung lediglich zur Erörterung der beanspruchten Lehre dient, diese jedoch nicht auf die Ausführungsbeispiele einschränken.

### Bezugszeichenliste

- 1: Sensorvorrichtung
- 2: Lichtquelle
- 3: Kollimator
- 4: Linienoptik
- 5: Fesnel-Linse
- 6: Gehäuse (der Sensorvorrichtung)
- 7: Austritts-/Eintrittsfenster
- 8: Oberfläche des Messobjekts
- 9: Messobjekt
- 10: Detektionsoptik
- 11: Detektor
- 12: Optische Achse
- 13: Erste Optik
- 14: Abschattung

## Patentansprüche

1. Vorrichtung zur berührungslosen Messung eines Abstands und/oder eines Profils eines Messobjekts (9), wobei eine Lichtquelle (2) einen Beleuchtungslichtstrahl zum Beleuchten des Messobjekts (9) erzeugt und wobei ein Detektor 11 zur Detektion des an dem Messobjekt reflektierten Anteils des Beleuchtungslichtstrahls vorgesehen ist,
**dadurch gekennzeichnet, dass** im Strahlengang des Beleuchtungslichtstrahls eine erste Optik (13) und eine zweite Optik angeordnet sind, wobei die erste und die zweite Optik derart ausgestaltet sind, dass der Beleuchtungslichtstrahl zunächst mittels der ersten Optik (13) in einer parallel zur Ausbreitungsrichtung angeordneten Auffächerungsebene aufgefächert und danach mittels der zweite Optik annähernd parallelisiert wird, wobei in Richtungen senkrecht zur Auffächerungsebene im Wesentlichen keine Auffächerung stattfindet, und dass die zweite Optik eine Fresnel-Linse (5) umfasst.

2. Vorrichtung nach Anspruch 1, **dadurch gekennzeichnet, dass** die Fresnel-Linse (5) aus Kunststoff hergestellt ist.

3. Vorrichtung nach Anspruch 1 oder 2, **dadurch gekennzeichnet, dass** die Fresnel-Linse (5) als zylindrische Fresnel-Linse ausgebildet ist.

4. Vorrichtung nach einem der Ansprüche 1 bis 3, **dadurch gekennzeichnet, dass** die Stufungen der Fresnel-Linse (5) im Wesentlichen senkrecht zur Auffächerungsebene des Beleuchtungslichtstrahls ausgebildet sind.

5. Vorrichtung nach einem der Ansprüche 1 bis 4, **dadurch gekennzeichnet, dass** der Beleuchtungslichtstrahl die zweite Optik in Richtungen senkrecht zu der Auffächerungsebene im Wesentlichen unverändert passiert.

6. Vorrichtung nach einem der Ansprüche 1 bis 5, **dadurch gekennzeichnet, dass** die erste Optik (13) einen Kollimator (3) aufweist.

7. Vorrichtung nach einem der Ansprüche 1 bis 6, **dadurch gekennzeichnet, dass** die erste Optik (13) eine Linienoptik (4) aufweist, wobei die Linienoptik (4) zur Erzeugung eines parallelen Linienbündels vorzugsweise in der Nähe eines Brennpunkts der Fresnel-Linse (5) angeordnet ist.

8. Vorrichtung nach einem der Ansprüche 1 bis 7, **dadurch gekennzeichnet, dass** der Detektor (11) eine Detektionsoptik (10) und die Detektionsoptik (10) vorzugsweise eine Zylinderlinse aufweist und dass die Detektionsoptik neben klassischen abbildenden Elementen eine bzw. eine Kombination von mehreren Zylinderlinsen beinhalten kann, bzw. als diffraktives oder holographisches Element ausgeprägt ist.

9. Vorrichtung nach einem der Ansprüche 1 bis 8, **dadurch gekennzeichnet, dass** in der Sensoranordnung ein näherungsweise parallelisierter Empfangsstrahlengang vorgesehen ist.

10. Vorrichtung nach einem der Ansprüche 1 bis 9, **dadurch gekennzeichnet, dass** die Vorrichtung in einem Gehäuse (6) angeordnet ist, dass der Beleuchtungslichtstrahl das Gehäuse (6) durch ein Austrittsfenster verlässt, dass der am Messobjekt reflektierte Anteil des Beleuchtungslichtstrahls durch ein Eintrittsfenster in das Gehäuse gelangt und dass Austrittsfenster und Eintrittsfenster von der ersten Optik (13) und der Fresnel-Linse (5) getrennt ausgeführt ist.

11. Verfahren zur berührungslosen Messung eines Abstands und/oder eines Profils eines Messobjekts, insbesondere zum Betreiben einer Vorrichtung nach einem der Ansprüche 1 bis 10, wobei das Messobjekt (9) mit einem Beleuchtungslichtstrahl beleuchtet wird und wobei ein an dem Messobjekt (9) reflektierter Anteil des Beleuchtungslichtstrahls zur Bestimmung des Abstands und/oder des Profils detektiert wird,
**dadurch gekennzeichnet, dass** das Messobjekt (9) unter Verwendung einer ersten Optik (13) und einer zweiten Optik im Strahlengang des Beleuchtungslichtstrahls linienförmig beleuchtet wird, wobei der Beleuchtungslichtstrahl mittels der ersten Optik (13) in einer parallel zur Ausbreitungsrichtung angeordneten Auffächerungsebene aufgefächert wird, während in Richtungen senkrecht zur Auffächerungsebene im Wesentlichen keine Auffächerung stattfindet, und wobei der Beleuchtungslichtstrahl nach Auffächerung durch die zweite Optik annähernd parallelisiert wird, wobei die zweite Optik eine Fresnel-Linse (5) umfasst.

12. Verfahren nach Anspruch 11, **dadurch gekennzeichnet, dass** zur Anpassung der Vorrichtung (1) der Abstand zwischen der ersten Optik (13) und der zweiten Optik angepasst wird.

## Claims

1. Device for contactless measurement of a spacing and/or a profile of a measurement object (9), wherein a light source (2) produces an illuminating light beam in order to illuminate the measurement object (9) and wherein a detector (11) is provided in order to detect the portion of the illuminating light beam reflected on the measurement object, **characterised in that** a first optical unit (13) and a second optical unit are arranged in the beam path of the illuminating light beam, wherein the first and the second optical units are constructed in such a manner that the illuminating light beam is first split by means of the first optical unit (13) in a splitting plane which is arranged parallel with the propagation direction and afterwards is substantially parallelised by means of the second optical unit, wherein substantially no splitting is produced in directions perpendicular to the splitting plane, and **in that** the second optical unit comprises a Fresnel lens (5).

2. Device according to claim 1, **characterised in that** the Fresnel lens (5) is produced from plastics material.

3. Device according to claim 1 or claim 2, **characterised in that** the Fresnel lens (5) is constructed as a cylindrical Fresnel lens.

4. Device according to any one of claims 1 to 3, **characterised in that** the graduations of the Fresnel lens (5) are constructed substantially perpendicularly to the splitting plane of the illuminating light beam.

5. Device according to any one of claims 1 to 4, **characterised in that** the illuminating light beam passes the second optical unit in directions perpendicular to the splitting plane in a substantially unchanged manner.

6. Device according to any one of claims 1 to 5, **characterised in that** the first optical unit (13) has a collimator (3).

7. Device according to any one of claims 1 to 6, **characterised in that** the first optical unit (13) has a linear optical unit (4), wherein the linear optical unit (4) is arranged to produce a parallel line bundle preferably close to a focal point of the Fresnel lens (5).

8. Device according to any one of claims 1 to 7, **characterised in that** the detector (11) has an optical detection unit (10) and the optical detection unit (10) preferably has a cylindrical lens and **in that** the optical detection unit in addition to conventional imaging elements may contain one or a combination of a plurality of cylinder lens(es) or is formed as a diffractive or holographic element.

9. Device according to any one of claims 1 to 8, **characterised in that** a substantially parallelised receiving beam path is provided in the sensor arrangement.

10. Device according to any one of claims 1 to 9, **characterised in that** the device is arranged in a housing (6), **in that** the illuminating light beam leaves the housing (6) through an outlet window, **in that** the portion of the illuminating light beam reflected on the measurement object reaches the housing through an inlet window and **in that** the outlet window and inlet window are constructed separately from the first optical unit (13) and the Fresnel lens (5).

11. Method for contactless measurement of a spacing and/or a profile of a measurement object, in particular for operating a device according to any one of claims 1 to 10, wherein the measurement object (9) is illuminated with an illuminating light beam and wherein a portion of the illuminating light beam reflected on the measurement object (9) is detected in order to determine the spacing and/or the profile, **characterised in that** the measurement object (9) using a first optical unit (13) and a second optical unit in the beam path of the illuminating light beam is illuminated in a linear manner, wherein the illuminating light beam is split by means of the first optical unit (13) in a splitting plane which is arranged parallel with the propagation direction, whilst substantially no splitting is produced in directions perpendicular to the splitting plane, and wherein the illuminating light beam is substantially parallelised after splitting by the second optical unit, wherein the second optical unit comprises a Fresnel lens (5).

12. Method according to claim 11, **characterised in that** the spacing between the fist optical unit (13) and the second optical unit is adapted in order to adapt the device (1).

## Revendications

1. Dispositif de mesure sans contact d'une distance et/ou d'un profil d'un objet de mesure (9), une source de lumière (2) générant un faisceau de lumière d'éclairage pour l'éclairage de l'objet de mesure (9) et un détecteur (11) étant prévu pour la détection de la part du faisceau de lumière d'éclairage réfléchie au niveau de l'objet de mesure,
**caractérisé en ce que**
dans le trajet du faisceau de lumière d'éclairage, sont disposées une première optique (13) et une deuxième optique, la première et la deuxième optiques étant conçues de façon à ce que le faisceau de lumière d'éclairage soit d'abord dispersé au moyen de la première optique (13) dans un plan de dispersion disposé parallèle à la direction de propagation puis approximativement parallélisé ensuite au moyen de la deuxième optique, aucune dispersion n'ayant lieu dans des directions perpendiculaires au plan de dispersion, et **en ce que** la deuxième optique comprend une lentille de Fresnel (5).

2. Dispositif selon la revendication 1, **caractérisé en ce que** la lentille de Fresnel (5) est constituée de matière plastique.

3. Dispositif selon la revendication 1 ou 2, **caractérisé en ce que** la lentille de Fresnel (5) est conçue comme une lentille de Fresnel cylindrique.

4. Dispositif selon l'une des revendications 1 à 3, **caractérisé en ce que** les échelonnements de la lentille de Fresnel (5) sont globalement perpendiculaires au plan de dispersion du faisceau de lumière d'éclairage.

5. Dispositif selon l'une des revendications 1 à 4, **caractérisé en ce que** le faisceau de lumière d'éclairage traverse globalement sans modification la deuxième optique dans des directions perpendiculaires au plan de dispersion.

6. Dispositif selon l'une des revendications 1 à 5, **caractérisé en ce que** la première optique (13) comprend un collimateur (3).

7. Dispositif selon l'une des revendications 1 à 6, **caractérisé en ce que** la première optique (13) comprend une optique en ligne (4), l'optique en ligne (4) étant disposée, pour la génération d'un faisceau linéaire parallèle, de préférence à proximité d'un point focal de la lentille de Fresnel (5).

8. Dispositif selon l'une des revendications 1 à 7, **caractérisé en ce que** le détecteur (11) comprend une optique de détection (10) et l'optique de détection (10) comprend de préférence une lentille cylindrique et **en ce que** l'optique de détection peut contenir, en plus d'éléments classiques de reproduction, une lentille cylindrique ou une combinaison de plusieurs lentilles cylindriques ou est conçue comme un élément de diffraction ou holographique.

9. Dispositif selon l'une des revendications 1 à 8, **caractérisé en ce que**, dans la disposition de capteurs, est prévu un trajet de faisceau de réception approximativement parallélisé.

10. Dispositif selon l'une des revendications 1 à 9, **caractérisé en ce que** le dispositif est disposé dans un boîtier (6), **en ce que** le faisceau de lumière d'éclairage quitte le boîtier (6) par une fenêtre de sortie, **en ce que** la part du faisceau de lumière d'éclairage réfléchie au niveau de l'objet de mesure arrive par une fenêtre d'entrée dans le boîtier et **en ce que** la fenêtre de sortie et la fenêtre d'entrée sont réalisées séparément de la première optique (13) et de la lentille de Fresnel (5).

11. Procédé de mesure sans contact d'une distance et/ou d'un profil d'un objet de mesure, plus particulièrement pour l'exploitation d'un dispositif selon l'une des revendications 1 à 10, l'objet de mesure (9) étant éclairé avec un faisceau de lumière d'éclairage et une part du faisceau de lumière d'éclairage réfléchie au niveau de l'objet de mesure (9) étant détectée pour la détermination de la distance et/ou du profil,
**caractérisé en ce que**
l'objet de mesure (9) est éclairé linéairement à l'aide d'une première optique (13) et d'une deuxième optique dans le trajet du faisceau de lumière d'éclairage, le faisceau de lumière d'éclairage étant dispersé au moyen de la première optique (13) dans un plan de dispersion parallèle à la direction de propagation, tandis que dans des directions perpendiculaires au plan de dispersion, globalement aucune dispersion n'a lieu et le faisceau de lumière d'éclairage étant approximativement parallélisé après la dispersion par la deuxième optique, la deuxième optique comprenant une lentille de Fresnel (5).

12. Procédé selon la revendication 11, **caractérisé en ce que**, pour l'adaptation du dispositif (1), la distance entre la première optique (13) et la deuxième optique est adaptée.
